# EUROPEAN PATENT APPLICATION

(11) **EP 4 075 771 A1**
(43) Date of publication of application: **19.10.2022**
(21) Application number: 20909047.1
(22) Date of filing: 28.10.2020
(51) Int. Cl.: H04M 1/2745

(54) **METHOD FOR GENERATING CONTACT BUSINESS CARD AND METHOD FOR DISPLAYING CONTACT INFORMATION**

(30) Priority: 31.12.2019 CN 201911417249
(71) Applicant: Petal Cloud Technology Co., Ltd., Dongguan, Guangdong 523799 (CN)
(72) Inventor: HE, Weixiang, Shenzhen, Guangdong 518129 (CN)
(74) Representative: Maiwald Patent- und Rechtsanwaltsgesellschaft mbH
(86) International application number: PCT/CN2020/124493
(87) International publication number: WO 2021/135581

(57) **Abstract**

This application is applicable to the field of terminal technologies, and provides a contact card generation method, a contact information display method, a contact card generation apparatus, a contact information display apparatus, a terminal device, and a computer-readable storage medium. The contact information display method includes: in response to a scanning instruction, scanning an encoded card of a target contact, and parsing the encoded card to obtain contact information and a hiding identifier of the target contact, where the encoded card is generated after encoding is performed based on the contact information and the hiding identifier of the target contact; and if the hiding identifier is used to indicate to display specified information in the contact information in a hidden manner, when the contact information is displayed, displaying the specified information in the contact information in the hidden manner, and displaying other information in plaintext, where the other information is information in the contact information except the specified information. According to embodiments of this application, user information security is improved, and user privacy is protected.

## Description

This application claims priority to Chinese Patent Application No. 201911417249.1, filed with the China National Intellectual Property Administration on December 31, 2019, and entitled "CONTACT CARD GENERATION METHOD AND CONTACT INFORMATION DISPLAY METHOD", which is incorporated herein by reference in its entirety.

### TECHNICAL FIELD

This application relates to the field of terminal technologies, and in particular, to a contact card generation method, a contact information display method, a contact card generation apparatus, a contact information display apparatus, a terminal device, and a computer-readable storage medium.

### BACKGROUND

With rapid development of communications technologies, communications terminals represented by mobile phones, tablets, and the like support more and more functions, and have been completely integrated into people's work and life. Currently, a communications function is still a core function of the communications terminals such as the mobile phones. For example, information about contacts such as family members, friends, partners, and customers of a user is recorded in an address book of the mobile phone, so that the user can conveniently communicate with the family members, the friends, the partners, the customers, and the like.

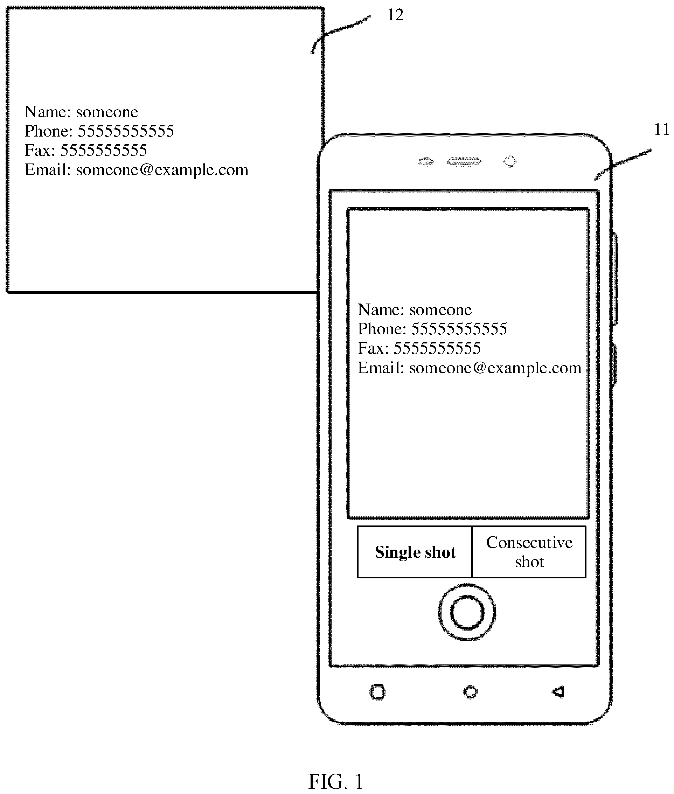

Currently, when users add contact information, such as a phone numbers, of each other, the users need to speak the phone numbers and manually enter the phone numbers. This manner is quite inconvenient and easy to record the phone numbers incorrectly. Therefore, in a related technology, a solution for obtaining contact information by scanning a contact card is provided, so that the contact information can be added accurately and conveniently. For example, as shown in FIG. 1, a mobile phone 11 enables a scanning function to scan a card 12 of a contact, so as to obtain contact information of the contact.

However, once the contact information is shared with another communications terminal by using the contact card, the another communications terminal obtains the contact information, and the contact information is easily disclosed by a criminal, and user privacy cannot be protected.

### SUMMARY

Embodiments of this application provide a contact card generation method, a contact information display method, a contact card generation apparatus, a contact information display apparatus, a terminal device, and a computer-readable storage medium, to resolve a technical problem that user privacy cannot be protected in related technologies.

According to a first aspect, this embodiment of this application provides a contact information display method, including:
in response to a scanning instruction, scanning an encoded card of a target contact, and parsing the encoded card to obtain contact information and a hiding identifier of the target contact, where the encoded card is generated after encoding is performed based on the contact information and the hiding identifier of the target contact; and
if the hiding identifier is used to indicate to display specified information in the contact information in a hidden manner, when the contact information is displayed, displaying the specified information in the contact information in the hidden manner, and displaying other information in plaintext, where the other information is information in the contact information except the specified information.

In the embodiment of the first aspect, the encoded card is generated after encoding is performed based on the contact information and the hiding identifier. If the hiding identifier is used to indicate to display the specified information in the contact information in the hidden manner, when a terminal device scans and parses the encoded card, the specified information cannot be displayed in plaintext on the terminal device. Therefore, the hiding identifier is added to the encoded card, and the user-specified information is set to be displayed in ciphertext on the terminal device that performs scanning, to improve security of user information and protect user privacy.

In a possible implementation of the first aspect, the method further includes: if the hiding identifier is used to indicate to display the specified information in the contact information in plaintext, displaying the contact information in plaintext when the contact information is displayed.

In a possible implementation of the first aspect, after the contact information is displayed, the method further includes: in response to a contact adding instruction, adding the target contact to a contact list.

In a possible implementation of the first aspect, the method further includes: storing the contact information and the hiding identifier.

In a possible implementation of the first aspect, the specified information of the target contact is encrypted and then stored.

In a possible implementation of the first aspect, the displaying the specified information in the contact information in the hidden manner includes any one of the following:
displaying the specified information in ciphertext;
omitting some or all characters in the specified information; and
replacing some or all characters in the specified information with preset characters.

In a possible implementation of the first aspect, the specified information includes a phone number of the target contact.

In a possible implementation of the first aspect, if the hiding identifier is used to indicate to display the specified information in the contact information in the hidden manner, and the specified information includes the phone number of the target contact, the method further includes: obtaining a call event for the target contact through listening, and displaying the phone number of the target contact in the hidden manner on a call screen.

In a possible implementation of the first aspect, if the hiding identifier is used to indicate to display the specified information in the contact information in plaintext, and the specified information includes the phone number of the target contact, the method further includes: obtaining a call event for the target contact through listening, and displaying the phone number of the target contact in plaintext on a call screen.

In a possible implementation of the first aspect, the call event includes a calling event or a called event, and the call screen includes a call waiting interface, a caller ID display interface, or an in-call interface.

In a possible implementation of the first aspect, if the hiding identifier is used to indicate to display the specified information in the contact information in the hidden manner, and the specified information includes the phone number of the target contact, the method further includes: displaying the phone number of the target contact in the hidden manner in an interface of a call record list.

In a possible implementation of the first aspect, if the hiding identifier is used to indicate to display the specified information in the contact information in plaintext, and the specified information includes the phone number of the target contact, the phone number is displayed in plaintext in the interface of the call record list.

In a possible implementation of the first aspect, the encoded card includes a bar code card, a two-dimensional code card, or a combination code card, and the combination code card is a card including a bar code and a two-dimensional code.

In a possible implementation of the first aspect, the contact information further includes a contact name of the target contact.

According to a second aspect, an embodiment of this application provides a contact card generation method, applied to a first terminal device and including:
obtaining contact information and a hiding identifier of a target contact, where the hiding identifier is used to indicate to display specified information in the contact information in a hidden manner or in plaintext on a second terminal device; and
generating an encoded card of the target contact based on the contact information and the hiding identifier.

In the embodiment of the second aspect, the first terminal device performs encoding based on the contact information and the hiding identifier to generate the encoded card of the target contact. The hiding identifier is used to indicate to display the specified information in the contact information in the hidden manner or in plaintext on the second terminal device. If the hiding identifier is used to indicate to display the specified information in the hidden manner on the second terminal device, the second terminal device cannot display the specified information in plaintext. The specified information of a user is set to be displayed in non-plaintext on another terminal device, to improve security of user information, and protect user privacy.

In a possible implementation of the second aspect, the obtaining contact information and a hiding identifier of a target contact includes:
in response to a card generation instruction triggered by a user, obtaining the contact information and the hiding identifier of the target contact; or
in response to a target contact adding event, obtaining the contact information and the hiding identifier of the target contact.

In a possible implementation of the second aspect, after the generating an encoded card of the target contact, the method further includes:
displaying the encoded card. The encoded card is displayed, so that another terminal device adds the contact by scanning the encoded card.

In a possible implementation of the second aspect, the encoded card includes a two-dimensional code card, a bar code card, or a combination code card, and the combination code card is a card including a bar code and a two-dimensional code.

In a possible implementation of the second aspect, the specified information includes a contact manner of the target contact.

In a possible implementation of the second aspect, there are one or more contact manners.

In a possible implementation of the second aspect, the contact manner includes a phone number.

In a possible implementation of the second aspect, the contact information further includes a contact name of the target contact.

According to a third aspect, this embodiment of this application provides a contact information display apparatus, including:
an obtaining module, configured to: in response to a scanning instruction, scan an encoded card of a target contact, and parse the encoded card to obtain contact information and a hiding identifier of the target contact, where the encoded card is generated after encoding is performed based on the contact information and the hiding identifier of the target contact; and
a displaying module, configured to: if the hiding identifier is used to indicate to display specified information in the contact information in a hidden manner, when the contact information is displayed, display the specified information in the contact information in the hidden manner, and display other information in plaintext, where the other information is information in the contact information except the specified information.

In a possible implementation of the third aspect, the displaying module is further configured to: if the hiding identifier is used to indicate to display the specified information in the contact information in plaintext, display the contact information in plaintext when the contact information is displayed.

In a possible implementation of the third aspect, the display module is specifically configured to: if the hiding identifier is used to indicate to display the specified information in the contact information in the hidden manner, when the contact information is displayed, display the specified information in the contact information in the hidden manner, and display the other information in plaintext, where the other information is information in the contact information except the specified information; and if the hiding identifier is used to indicate to display the specified information in the contact information in plaintext, display the contact information in plaintext when the contact information is displayed.

In a possible implementation of the third aspect, the apparatus further includes an adding module. The adding module is configured to add the target contact to a contact list in response to a contact adding instruction.

In a possible implementation of the third aspect, the apparatus further includes a storage module. The storage module is configured to store the contact information and the hiding identifier.

In a possible implementation of the third aspect, the specified information of the target contact is encrypted and then stored.

In a possible implementation of the third aspect, the displaying the specified information in the contact information in the hidden manner includes any one of the following:
displaying the specified information in ciphertext;
omitting some or all characters in the specified information; and
replacing some or all characters in the specified information with preset characters.

In a possible implementation of the third aspect, the specified information includes a phone number of the target contact.

In a possible implementation of the third aspect, if the hiding identifier is used to indicate to display the specified information in the contact information in the hidden manner, and the specified information includes the phone number of the target contact, the apparatus further includes a call hidden display module. The call hidden display module is configured to obtain a call event for the target contact through listening, and display the phone number of the target contact in the hidden manner on a call screen.

In a possible implementation of the third aspect, if the hiding identifier is used to indicate to display the specified information in the contact information in plaintext, and the specified information includes the phone number of the target contact, the apparatus further includes a call hidden display module. The call hidden display module is configured to obtain a call event for the target contact through listening, and display the phone number of the target contact in plaintext on a call screen.

In a possible implementation of the third aspect, the call event includes a calling event or a called event, and the call screen includes a call waiting interface, a caller ID display interface, or an in-call interface.

In a possible implementation of the third aspect, the apparatus further includes a record hidden display module. The record hidden display module is configured to: if the hiding identifier is used to indicate to display the specified information in the contact information in the hidden manner, and the specified information includes the phone number of the target contact, display the phone number in the hidden manner in an interface of a call record list.

In a possible implementation of the third aspect, the apparatus further includes a record plaintext display module. The record plaintext display module is configured to: if the hiding identifier is used to indicate to display the specified information in the contact information in plaintext, and the specified information includes the phone number of the target contact, display the phone number in plaintext in an interface of a call record list.

In a possible implementation of the third aspect, the encoded card includes a bar code card, a two-dimensional code card, or a combination code card, and the combination code card is a card including a bar code and a two-dimensional code.

According to a fourth aspect, an embodiment of this application provides a contact card generation apparatus, configured in a first terminal device and including:
an obtaining module, configured to obtain contact information and a hiding identifier of a target contact, where the hiding identifier is used to indicate to display specified information in the contact information in a hidden manner or in plaintext on a second terminal device; and
a generation module, configured to generate an encoded card of the target contact based on the contact information and the hiding identifier.

In a possible implementation of the fourth aspect, the obtaining module is specifically configured to:
in response to a card generation instruction triggered by a user, obtaining the contact information and the hiding identifier of the target contact; or
in response to a target contact adding event, obtaining the contact information and the hiding identifier of the target contact.

In a possible implementation of the fourth aspect, the apparatus further includes a display module. The display module is configured to display the encoded card. The encoded card is displayed, so that another terminal device adds the contact by scanning the encoded card.

In a possible implementation of the fourth aspect, the encoded card includes a two-dimensional code card, a bar code card, or a combination code card, and the combination code card is a card including a bar code and a two-dimensional code.

In a possible implementation of the fourth aspect, the specified information includes a contact manner of the target contact.

In a possible implementation of the fourth aspect, there are one or more contact manners.

In a possible implementation of the fourth aspect, the contact manner includes a phone number.

According to a fifth aspect, this embodiment of this application provides a contact information display method, including:
in response to a scanning instruction, scanning an encoded card of a target contact, and parsing the encoded card to obtain contact information and a hiding identifier of the target contact, where the encoded card is generated after encoding is performed based on the contact information and the hiding identifier of the target contact, and the hiding identifier is used to indicate to display specified information in the contact information in plaintext; and
displaying the contact information in plaintext when the contact information is displayed.

In a possible implementation of the fifth aspect, the method further includes: displaying the hiding identifier in plaintext.

According to a sixth aspect, this embodiment of this application provides a contact information display method, including:
in response to a scanning instruction, scanning an encoded card of a target contact, and parsing the encoded card to obtain contact information and a hiding identifier of the target contact, where the encoded card is generated after encoding is performed based on the contact information and the hiding identifier of the target contact; and
if the hiding identifier is used to indicate to display specified information in the contact information in a hidden manner, when the contact information is displayed, displaying the specified information in the contact information in the hidden manner, and displaying other information in plaintext, where the other information is information in the contact information except the specified information; or
if the hiding identifier is used to indicate to display the specified information in the contact information in plaintext, displaying the contact information in plaintext when the contact information is displayed.

In a possible implementation of the sixth aspect, the method further includes: displaying the hiding identifier in plaintext.

According to a seventh aspect, an embodiment of this application provides a contact card generation method, applied to a first terminal device and including:
obtaining contact information and a hiding identifier of a target contact, where the hiding identifier is used to indicate to display specified information in the contact information in a hidden manner on a second terminal device; and
generating an encoded card of the target contact based on the hiding identifier and other information in the contact information except the specified information.

According to an eighth aspect, an embodiment of this application provides a contact card generation method, applied to a first terminal device and including:
obtaining contact information and a hiding identifier of a target contact, where the hiding identifier is used to indicate to display specified information in the contact information in plaintext on a second terminal device; and
generating an encoded card of the target contact based on the contact information and the hiding identifier.

According to a ninth aspect, an embodiment of this application provides a terminal device, including: a memory, a processor, and a computer program that is stored in the memory and that can run on the processor, where when the processor executes the computer program, the terminal device is enabled to implement the method according to any one of the first aspect, the second aspect, the fifth aspect, the sixth aspect, or the seventh aspect.

In a possible implementation of the ninth aspect, the terminal device is a mobile phone.

According to a tenth aspect, an embodiment of this application provides a computer-readable storage medium. The computer-readable storage medium stores a computer program. When the computer program is executed by a processor, the method according to any one of the first aspect, the second aspect, the fifth aspect, the sixth aspect, or the seventh aspect is implemented.

According to an eleventh aspect, an embodiment of this application provides a computer program product. When the computer program product runs on a terminal device, the terminal device is enabled to perform the method according to any one of the first aspect, the second aspect, the fifth aspect, the sixth aspect, or the seventh aspect.

It may be understood that, for beneficial effects of the third aspect to the eleventh aspect, refer to related descriptions in the first aspect and the second aspect. Details are not described herein again.

### BRIEF DESCRIPTION OF DRAWINGS

FIG. 1 is a schematic diagram of an application scenario of a contact adding method according to the conventional technology;
FIG. 2A and FIG. 2B are a schematic diagram of application scenarios of a contact card generation method and a contact adding method according to an embodiment of this application;
FIG. 3A and FIG. 3B are a schematic diagram of application scenarios of a contact card generation method and a contact adding method according to another embodiment of this application;
FIG. 4 is a schematic diagram of a hardware structure of a mobile phone applicable to a contact card generation method and a contact adding method according to this application;
FIG. 5A is a schematic flowchart of a contact card generation method according to an embodiment of this application;
FIG. 5B is a schematic flowchart of a contact card generation method according to another embodiment of this application;
FIG. 6A is a schematic diagram of a structure of a display interface of a contact list according to an embodiment of this application;
FIG. 6B is a schematic diagram of a structure of a contact two-dimensional code card display interface according to an embodiment of this application;
FIG. 7A is a schematic diagram of a structure of a display interface of a contact list according to another embodiment of this application;
FIG. 7B is a schematic diagram of a structure of a contact two-dimensional code card display interface according to another embodiment of this application;
FIG. 8 is a schematic diagram of a structure of a contact information editing interface according to an embodiment of this application;
FIG. 9A is a schematic diagram of a structure of a contact information display interface according to an embodiment of this application;
FIG. 9B is a schematic diagram of a structure of a contact information editing interface according to another embodiment of this application;
FIG. 10A is a schematic diagram of a structure of a contact information display interface according to another embodiment of this application;
FIG. 10B is a schematic diagram of a structure of a contact information editing interface according to still another embodiment of this application;
FIG. 11A is a schematic flowchart of a contact adding method according to an embodiment of this application;
FIG. 11B is a schematic flowchart of a contact adding method according to another embodiment of this application;
FIG. 11C is a schematic flowchart of a contact adding method according to still another embodiment of this application;
FIG. 12 is a schematic diagram of an application scenario according to an embodiment of this application;
FIG. 13 is a schematic diagram of an application scenario according to another embodiment of this application;
FIG. 14 is a schematic flowchart of a contact card generation apparatus according to an embodiment of this application; and
FIG. 15 is a schematic flowchart of a contact adding apparatus according to an embodiment of this application.

### DESCRIPTION OF EMBODIMENTS

In the following descriptions, to illustrate rather than limit, specific details such as a particular system structure and a technology are provided to make a thorough understanding of embodiments of this application. However, persons skilled in the art should know that this application may also be implemented in other embodiments without these specific details. In other cases, detailed descriptions of well-known systems, apparatuses, circuits, and methods are omitted, so that this application is described without being obscured by unnecessary details.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

It should be further understood that, in embodiments of this application, "one or more" refers to one, two, or more, and the term "and/or" describes an association between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

When used in the specification and claims of this application, the term "include" indicates presence of described features, entireties, steps, operations, elements, and/or components, but does not exclude presence or addition of one or more other features, entireties, steps, operations, elements, components, and/or collections thereof.

As used in the specification and the claims of this application, the term "if' may be interpreted as "when", "once", "in response to determining", or "in response to detecting" depending on the context.

In addition, in the description of the specification and the claims of this application, the terms "first", "second", and the like are merely used for differentiation and description, but shall not be understood as an indication or an implication of relative importance.

Referring to "an embodiment" or "some embodiments" or the like in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

To describe the technical solutions of this application, the following uses specific embodiments for description.

Currently, once contact information is shared to a communications terminal through a contact card, the communications terminal obtains the contact information, and the contact information is displayed in plaintext on the communications terminal, so that the contact information is easily disclosed by a criminal, and user privacy cannot be protected.

Therefore, for a technical problem that user privacy cannot be protected in a related technology, this application improves a contact card generation manner, and provides a contact card generation method. Corresponding to the generation method, a contact information display method is further provided. In this embodiment of this application, contact information and a hiding identifier are encoded together to generate an encoded card (that is, a contact card). The hiding identifier is used to indicate whether to display specified information of a contact in a hidden manner on another terminal device. When a user shares an encoded card with another user, the user may perform privacy setting based on a situation of the user, to prevent the another user from disclosing plaintext information after obtaining the plaintext information. Therefore, in this embodiment of this application, user privacy is protected while the contact information is accurately and quickly shared.

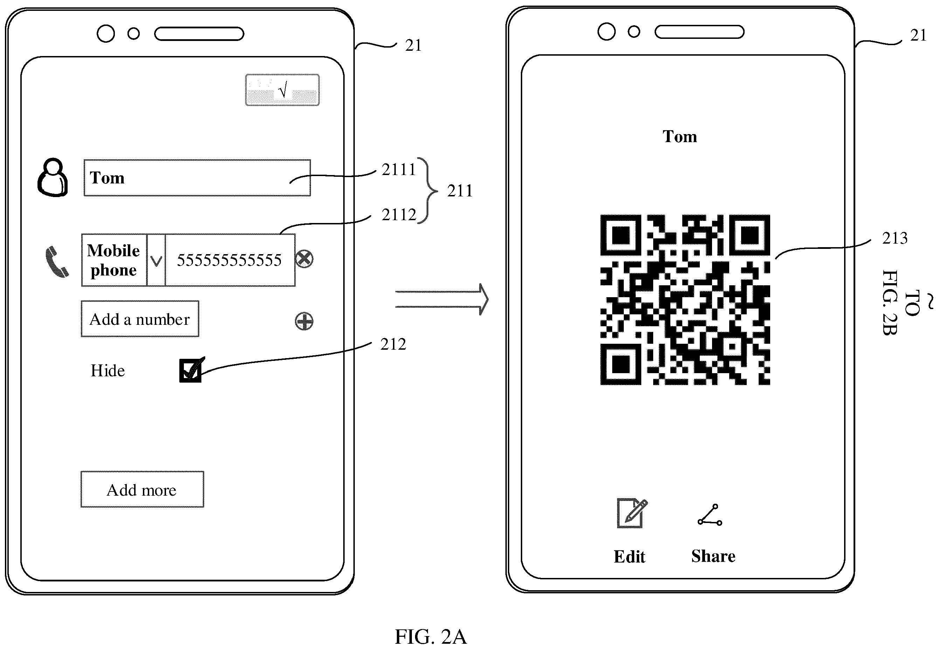

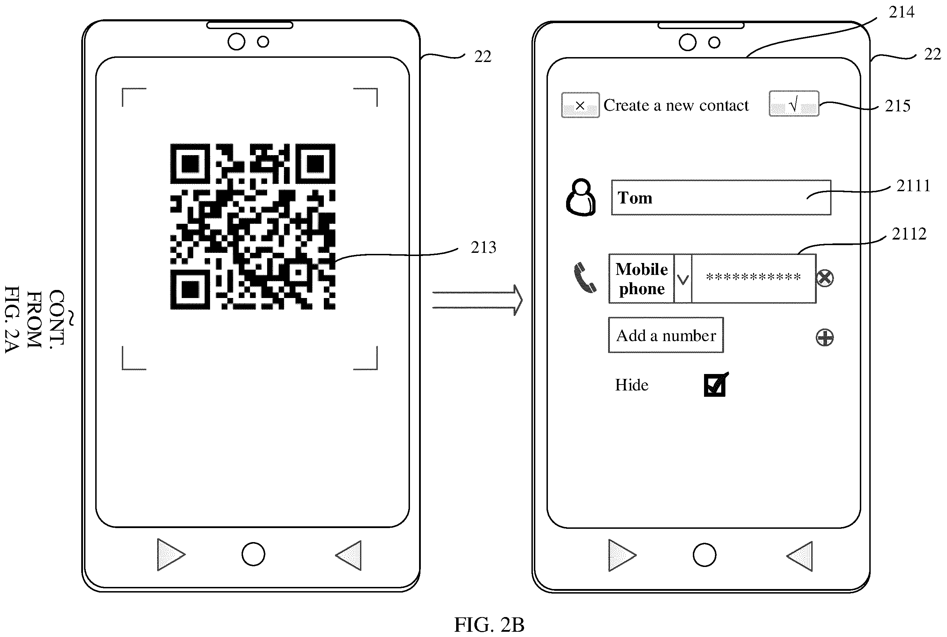

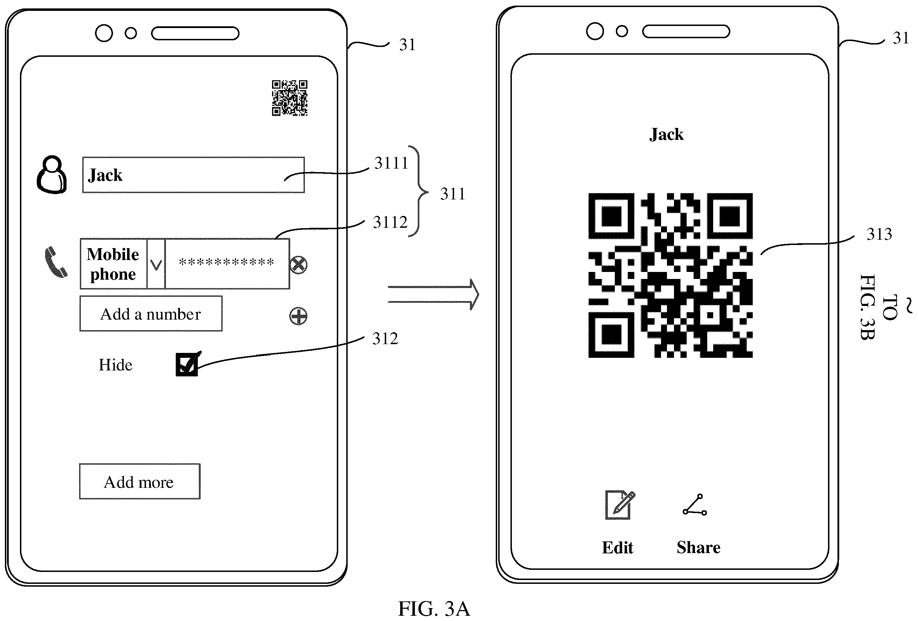

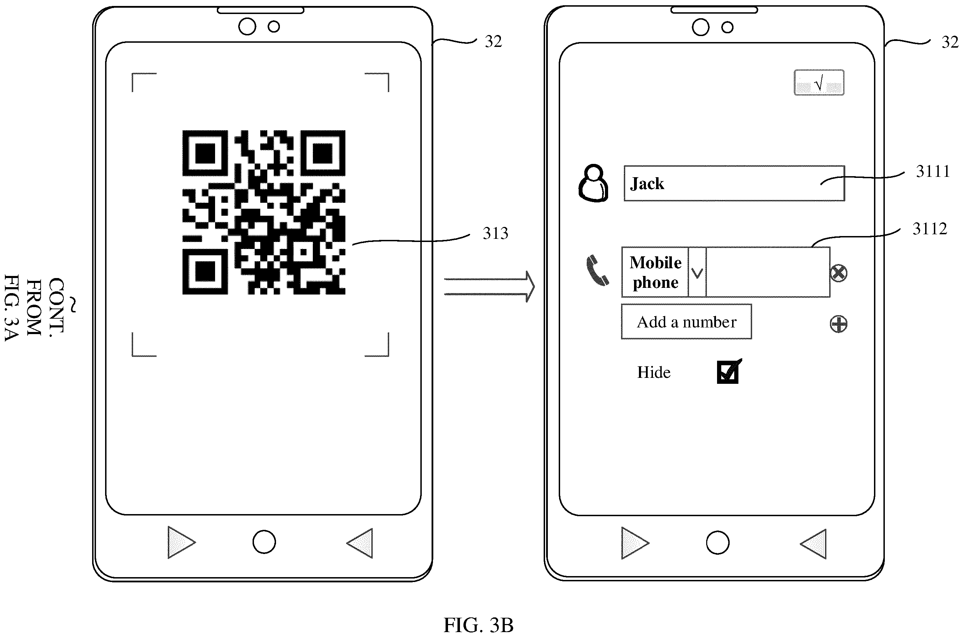

A scenario applicable to embodiments of this application is first described by using two non-limiting examples. As shown in FIG. 2A, FIG. 2B, FIG. 3A, and FIG. 3B, FIG. 2A and FIG. 2B are a schematic diagram of an application scenario according to an embodiment of this application. The application scenario includes two terminal devices: a first terminal device 21 and a second terminal device 22. In an example in FIG. 2A and FIG. 2B, the two terminal devices are both mobile phones.

The first terminal device 21 generates an encoded card 213 of a target contact Tom (Tom may be a user or an owner of the first terminal device) based on contact information 211 and a hiding identifier of the target contact in a mobile phone address book, and displays the encoded card 213. The contact information 211 shown in FIG. 2A and FIG. 2B includes a name 2111 of Tom and a phone number 2112 of Tom. In the scenario shown in FIG. 2A and FIG. 2B, the user Tom selects a hiding control 212. In this case, a hiding identifier corresponding to the hiding control 212 is used to indicate to display the phone number 2112 of the target contact Tom in a hidden manner. The encoded card 213 is a two-dimensional code card. The second terminal device 22 invokes a camera to scan the encoded card 213 of Tom, and parses the encoded card 213 to obtain the name 2111, the phone number 2112, and the hiding identifier of the target contact Tom. The name 2111 of Tom is displayed on the second terminal device 22, and the phone number 2112 of Tom is displayed in the hidden manner on the second terminal device 22. For example, in FIG. 2A and FIG. 2B, the phone number 2112 of Tom is replaced with a string of asterisks (^{∗}) for display.

FIG. 3A and FIG. 3B are a schematic diagram of another application scenario according to an embodiment of this application. The application scenario includes two terminal devices: a first terminal device 31 and a second terminal device 32. In an example in FIG. 3A and FIG. 3B, the two terminal devices are both mobile phones.

The first terminal device 31 generates an encoded card 313 of a target contact Jack (Jack may be a friend of a user or an owner of the first terminal device) based on contact information 311 and a hiding identifier of the target contact in a mobile phone address book, and displays the encoded card 313. The contact information 311 shown in FIG. 3A and FIG. 3B includes a name 3111 of Jack and a phone number 3112 of Jack, and a hiding control 312 is in a selected state. In this case, a hiding identifier corresponding to the hiding control 312 is used to indicate to display the phone number 3112 of the target contact Jack in a hidden manner. The encoded card 313 generated by the first terminal device 31 is a two-dimensional code card. The second terminal device 22 invokes a camera to scan the encoded card 313, and obtains the name 3111 and the hiding identifier of the target contact Jack from the encoded card 313 through parsing, but cannot obtain the phone number 3112 of the target contact from the encoded card 313 through parsing. The name 3111 of Jack is displayed on the second terminal device 32, but the phone number 3112 of Jack is not displayed, to avoid disclosure of a contact manner of Jack. Optionally, in another example, when the hiding identifier is used to indicate to display the phone number of the target contact Jack in the hidden manner, the first terminal device 31 cannot generate the encoded card of Jack, and therefore the second terminal device 32 cannot add the contact information of Jack through code scanning.

Optionally, the hiding control is used by the user to select or switch the hiding identifier. In the examples shown in FIG. 2A, FIG. 2B, FIG. 3A, and FIG. 3B, the selectable hiding control is set in a user interface for the user to select or switch the hiding identifier, and is set below the phone number of the target contact. It may be understood that in another example of this application, the hiding control may alternatively be a selection control in another form, for example, an option button, a switch, or a drop-down menu. In another example of this application, the hiding control may alternatively be disposed at another location, for example, on two sides of a phone number display bar. The hiding control in the figure is merely an example, and a representation form and a display location of the hiding control are not limited in this application. More generally, the hiding control and a control other than the hiding control mentioned in embodiments of this application are merely examples in the figure, and cannot be construed as a specific limitation on this application. Representation forms and display locations of various controls are not limited in this application.

Optionally, the hiding identifier is used to indicate to display specified information in the contact information of the target contact in the hidden manner, or is used to indicate to display the specified information in the contact information of the target contact in plaintext. When the hiding identifier is used to indicate to display the specified information in the contact information in the hidden manner, the hidden display includes but is not limited to: displaying the specified information in ciphertext, or omitting some or all characters in the specified information, or shielding some or all characters in a contact manner, or replacing some or all characters in the specified information with preset characters. For example, asterisks (^{∗}) are used to replace some or all characters in the specified information. It should be understood that the description herein is merely an example, and all manners of displaying the contact manner in non-plaintext may be used to implement this application. A specific representation form of hidden display is not limited in this application.

Optionally, there are two types of hiding identifiers. One type of hiding identifier is used to indicate to display the specified information in the contact information of the target contact in the hidden manner, and the other type of hiding identifier is used to indicate to display the specified information in the contact information of the target contact in plaintext. As a non-limiting example, an indication result of the hiding identifier may be implemented by using two different preset values, for example, 0 and 1. When a hiding identifier bit is set as 0, it indicates that the specified information of the target contact is displayed in plaintext. When a hiding identifier bit is set as 1, it indicates that the specified information of the target contact is displayed in the hidden manner. More generally, any number, character, letter, or a combination of at least two of the first three may be used as the representation form of the hiding identifier. It should be understood that the specific representation form of the hiding identifier is not limited in this application.

Optionally, the specified information includes but is not limited to at least one of a contact name, a contact manner, and the like, and there may be one or more pieces of specified information. In addition to the phone numbers (for example, a home fixed-line phone number, a mobile phone number, or an office fixed-line phone number) shown in FIG. 2A, FIG. 2B, FIG. 3A, and FIG. 3B, the contact manner may further include an email address, a social application account, a home address, an employment company, a company address, and the like. The contact name includes but is not limited to the names shown in FIG. 2A, FIG. 2B, FIG. 3A, and FIG. 3B, and further includes an appellation, a nickname, a brief appellation, a job title, or the like. It should be understood that a specific representation form of the name of the target contact is not limited in embodiments of this application. To describe embodiments of this application more conveniently, an example in which the specified information is a contact manner, for example, a phone number, is used in subsequent embodiments for description, and should not be construed as a limitation on this application.

Optionally, the target contact is an object for which the encoded card needs to be generated. The target contact may be the user (or the owner) of the first terminal device, or may be a contact other than the user in the address book of the first terminal device. When the target contact is the user, the hiding identifier may be edited by the user. When the target contact is another contact, preferably, the hiding identifier cannot be edited by the user, and is set by the another contact when the user adds an encoded card of the another contact.

Optionally, when the target contact is the user of the first terminal device, in the example shown in FIG. 2A and FIG. 2B, if the user sets the hiding identifier to indicate to display the specified information of the target contact in the hidden manner, after scanning the encoded card and obtaining the contact information of the target contact through parsing, the second terminal device displays the specified information of the target contact in the hidden manner, and displays other information in the contact information except the specified information in plaintext. In another example, if the user sets the hiding identifier to indicate to display the specified information of the target contact in plaintext, after scanning the encoded card and obtaining the contact information of the target contact through parsing, the second terminal device displays the contact information of the target contact in plaintext.

Optionally, when the target contact is another contact, and the hiding identifier of the target contact is displaying a contact manner in the hidden manner, in the example shown in FIG. 3A and FIG. 3B, the encoded card generated by the first terminal does not include the contact manner of the target contact, so that even if the second terminal device scans the encoded card, the second terminal device cannot obtain the contact manner of the target contact. In another example, the first terminal device cannot generate the encoded card of the target contact, and therefore cannot share the encoded card of the target contact with the second terminal device. In this way, disclosure of the contact manner of the target contact is avoided, and user privacy is further protected.

Optionally, the encoded card is generated after the contact information and the hiding identifier are encoded. An encoding manner may include an encoding manner of a bar code, a two-dimensional code, or the like, for example, a two-dimensional code encoding manner based on Base64 encoding. The encoding manner is not limited in this application. In addition to the two-dimensional code cards shown in FIG. 2A, FIG. 2B, FIG. 3A, and FIG. 3B, the encoded card may alternatively include a bar code card, a combination code card, or the like. The two-dimensional code card may be a card including one or more two-dimensional codes, the bar code card may be a card including one or more two-dimensional codes, and the combination code card may be a card including at least one bar code and at least one two-dimensional code. It should be understood that a specific representation form of the encoded card is not limited in embodiments of this application. For ease of description, in subsequent embodiments, an example in which the encoded card is a two-dimensional code card is used for description. It should be understood that the two-dimensional code cannot be used as a specific limitation on this application.

Optionally, the terminal device may include the mobile phone shown in FIG. 2A, FIG. 2B, FIG. 3A, and FIG. 3B. In another embodiment of this application, the terminal device may further include terminal devices such as a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application. For ease of description, in subsequent embodiments, an example in which the terminal device is a mobile phone is used for description. It should be understood that this should not be construed as a limitation on this application.

By way of example and not limitation, when the terminal device is a wearable device, the wearable device may alternatively be a generic term for wearable devices such as glasses, gloves, watches, clothes, and shoes that are developed based on intelligent design of daily wearing by using wearable technologies. The wearable device is a portable device that is directly worn on a body or integrated into clothes or an accessory of a user. The wearable device is not only a hardware device, but also implements a powerful function through software support, data exchange, and cloud interaction. In a broad sense, the wearable intelligent device includes a device that provides a complete function, has a large size, and can implement all or some functions without relying on a smartphone, for example, a smart watch or smart glasses; and includes a device that focuses only on a specific type of application and needs to be used in combination with another device such as a smartphone, for example, various smart bands and smart jewelry used for vital sign monitoring.

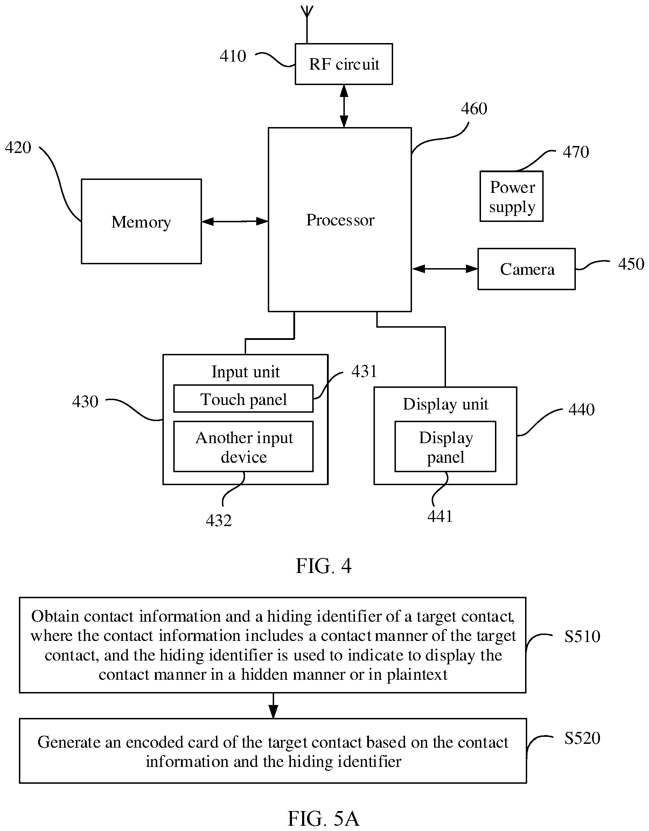

For example, the terminal device is a mobile phone. FIG. 4 is a block diagram of a partial structure of the mobile phone according to an embodiment of this application. Refer to FIG. 4. The mobile phone includes components such as a radio frequency (Radio Frequency, RF) circuit 410, a memory 420, an input unit 430, a display unit 440, a camera 450, a processor 460, and a power supply 470. A person skilled in the art may understand that the structure of the mobile phone shown in FIG. 4 does not constitute a limitation on the mobile phone, and the mobile phone may include more or fewer components than those shown in the figure, or combine some components, or have different component arrangements.

The following describes the components of the mobile phone in detail with reference to FIG. 4.

The RF circuit 410 may be configured to receive and send a signal in an information receiving or sending process or a call process, and particularly, after receiving downlink information of a base station, send the downlink information to the processor 480 for processing; and send designed uplink data to the base station. Usually, the RF circuit includes but is not limited to an antenna, at least one amplifier, a transceiver, a coupler, a low noise amplifier (Low Noise Amplifier, LNA), a duplexer, and the like. In addition, the RF circuit 410 may further communicate with a network and another device through wireless communication. The wireless communication may use any communications standard or protocol, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Messaging Service, SMS), and the like. In some embodiments of this application, the RF circuit 410 sends, to the base station, a dialing request that carries a phone number.

The memory 420 may be configured to store a software program and a module, and the processor 480 executes various function applications of the mobile phone and data processing by running the software program and the module that are stored in the memory 420. The memory 420 may mainly include a program storage area and a data storage area. The program storage area may store an operating system, an application program required for at least one function (such as a sound playing function and an image playing function), and the like. The data storage area may store data created based on use of the mobile phone (such as audio data and a phone book), and the like. In addition, the memory 420 may include a high-speed random access memory, and may further include a non-volatile memory, for example, at least one magnetic disk storage device, a flash storage device, or another volatile solid-state storage component.

The input unit 430 may be configured to receive input digit or character information, and generate key signal input related to user settings and function control of the mobile phone 400. Specifically, the input unit 430 may include a touch panel 431 and another input device 432. The touch panel 431, which is also referred to as a touchscreen, may collect a touch operation (for example, an operation of a user on the touch panel 431 or near the touch panel 431 by using any proper object or accessory such as a finger or a stylus) of a user on or near the touch panel 431, and drive a corresponding connection apparatus according to a preset program. Optionally, the touch panel 431 may include two parts: a touch detection apparatus and a touch controller. The touch detection apparatus detects a touch direction of the user, detects a signal brought by a touch operation, and transfers the signal to the touch controller. The touch controller receives touch information from the touch detection apparatus, converts the touch information into touch point coordinates, sends the touch point coordinates to the processor 480, and can receive and execute a command sent by the processor 480. In addition, the touch panel 431 may be implemented by using a plurality of types such as a resistive type, a capacitive type, an infrared ray, and a surface acoustic wave. In addition to the touch panel 431, the input unit 430 may further include the another input device 432. Specifically, the another input device 432 may include but is not limited to one or more of a physical keyboard, a function key (for example, a volume control key or a power on/off key), a trackball, a mouse, an operating lever, or the like.

The display unit 440 may be configured to display information entered by the user, information provided for the user, and various menus of the mobile phone. The display unit 440 may include a display panel 441. Optionally, the display panel 441 may be configured in a form of a liquid crystal display (Liquid Crystal Display, LCD), an organic light-emitting diode (Organic Light-Emitting Diode, OLED), or the like. Further, the touch panel 431 may cover the display panel 441. When detecting a touch operation on or near the touch panel 431, the touch panel 431 transmits the touch operation to the processor 480 to determine a type of a touch event. Then, the processor 480 provides corresponding visual output on the display panel 441 based on the type of the touch event. In FIG. 4, the touch panel 431 and the display panel 441 are used as two independent components to implement input and output functions of the mobile phone. However, in some embodiments, the touch panel 431 may be integrated with the display panel 441 to implement the input and output functions of the mobile phone. In some embodiments of this application, the display unit 440 is configured to display an encoded card. In some embodiments of this application, the display unit 440 is configured to display a user interface.

The camera 450 on the mobile phone 400 may be a front-facing camera, rear-facing camera, or built-in camera. The mobile phone 400 may include one or more cameras. For example, the mobile phone may include three cameras: one primary camera, one wide-angle camera, and one long-focus camera. When the mobile phone includes a plurality of cameras, all of the plurality of cameras may be front-facing cameras, rear-facing cameras, built-in cameras, some front-facing cameras, some rear-facing cameras, some built-in cameras, or the like. This is not limited in this embodiment of this application. In some embodiments of this application, the camera 450 is started to scan the encoded card.

The processor 460 is a control center of the mobile phone 400, uses various interfaces and lines to connect all parts of the entire mobile phone, and runs or executes a software program and/or a module that are/is stored in the memory 420 and invokes data stored in the memory 420 to execute various functions of the mobile phone and data processing, so as to perform overall monitoring on the mobile phone. Optionally, the processor 460 may include one or more processing units. Preferably, an application processor and a modem processor may be integrated into the processor 460. The application processor mainly processes the operating system, a user interface, an application program, or the like. The modem processor mainly processes wireless communication. It should be understood that, the modem processor may either not be integrated in the processor 460.

The mobile phone 400 further includes the power supply 470 (for example, a battery) supplying power to the components. Preferably, the power supply may be logically connected to the processor 470 by using a power management system, to implement functions such as charging and discharging management and power consumption management by using the power management system.

Although not shown in the figure, the mobile phone may further include at least one type of sensor, for example, a light sensor, a motion sensor, or another sensor. Specifically, the light sensor may include an ambient light sensor and a proximity sensor. The ambient light sensor may adjust luminance of the display panel 441 according to brightness of ambient light, and the proximity sensor may turn off the display panel 441 and/or backlight when the mobile phone moves to an ear. As one type of the motion sensor, an accelerometer sensor may detect acceleration values in various directions (usually on three axes). The accelerometer sensor may detect a value and a direction of gravity when the accelerometer sensor is stationary, and may be applied to an application for recognizing a mobile phone posture (such as switching between a landscape screen and a vertical screen, a related game, and magnetometer posture calibration), a function related to vibration recognition (such as a pedometer and a knock), and the like. Other sensors such as a gyroscope, a barometer, a hygrometer, a thermometer, and an infrared sensor may be further configured in the mobile phone. Details are not described herein.

Although not shown in the figure, the mobile phone may further include an audio circuit, a loudspeaker, and a microphone, which may provide an audio interface between the user and the mobile phone. The audio circuit may convert received audio data into an electric signal and transmit the electric signal to the loudspeaker. The loudspeaker converts the electric signal into a sound signal for output. In addition, the microphone converts a collected sound signal into an electric signal. The audio circuit receives the electric signal, converts the electric signal into audio data, and then outputs the audio data to the processor for processing. Then, the processor sends the audio data to, for example, another mobile phone by using the RF circuit 410, or outputs the audio data to the memory 420 for further processing.

Although not shown in the figure, the mobile phone may further include a Wi-Fi module. Wi-Fi is a short-distance wireless transmission technology. The mobile phone may help, by using the Wi-Fi module, the user receive and send an email, browse a web page, access streaming media, and the like. The Wi-Fi module provides wireless broadband Internet access for the user.

In addition, although not shown in the figure, the mobile phone may further include a Bluetooth module and the like. Details are not described herein.

FIG. 5A is an implementation flowchart of a contact card generation method according to an embodiment of this application. The contact card generation method may be applied to a terminal device. For example, the contact card generation method may be applied to the first terminal device, for example, the mobile phone, according to the embodiments in FIG. 2A, FIG. 2B, FIG. 3A, and FIG. 3B. As shown in FIG. 5A, the method includes steps S510 and S520. A specific implementation principle of each step is as follows.

S510: Obtain contact information and a hiding identifier of a target contact, where the contact information includes a contact manner of the target contact, and the hiding identifier is used to indicate to display the contact manner in a hidden manner or in plaintext.

The target contact may be a user (or an owner) of the terminal device or one of other contacts except the user in a contact list of the terminal device.

The contact information includes at least one contact manner of the target contact. Optionally, in another embodiment of this application, the contact information may further include a contact name and the like.

It should be noted that, when the contact information includes a plurality of contact manners, in some embodiments of this application, the hiding identifier may indicate to display some or all of the plurality of contact manners in the hidden manner or in plaintext. For example, the contact manner of the target contact includes a mobile phone number and a home address, and the hiding identifier may indicate to display the mobile phone number and the home address in the hidden manner, or the hiding identifier may indicate to display the mobile phone number in the hidden manner.

In some other embodiments of this application, the contact manner includes a phone number. The hiding identifier may indicate to display the phone number in the hidden manner or in plaintext, and does not indicate to display a contact manner other than the phone number in the hidden manner or in plaintext. For example, the contact manner of the target contact includes a mobile phone number, a home fixed-line phone number, and a home address, and the hiding identifier may indicate to display the mobile phone number and the home fixed-line phone number in the hidden manner.

To be specific, when the contact manner includes the plurality of contact manners, the terminal device provides a hiding control for each contact manner, so that the user sets the hiding identifier corresponding to each contact manner. Alternatively, the terminal device provides a hiding control for a specified contact manner in the contact manners, for example, a phone number, which may be referred to as a number hiding control, and does not provide a hiding control for another contact manner. Alternatively, the terminal device sets a hiding control for a type of information in the contact information, so that the user selects to set a hiding identifier corresponding to this type of information.

More generally, in this embodiment of this application, the terminal device may set a hiding identifier for a piece of information in the contact information of the target contact, for example, set a hiding identifier for a mobile phone number. The terminal device may alternatively set a hiding identifier for a plurality of pieces of information in the contact information of the target contact, for example, set a hiding identifier for some contact manners in the contact information. The terminal device may alternatively set a hiding identifier for a type of information in the contact information of the target contact, for example, set a hiding identifier for all phone numbers in the contact information, including a mobile phone number and a fixed-line phone number. In other words, in this embodiment of this application, there may be one or more pieces of specified information. A specific implementation may be set by the terminal device by default, or may be customized by the user. This is not limited in this application.

S520: Generate an encoded card of the target contact based on the contact information and the hiding identifier.

The contact information and the hiding identifier are encoded to generate the encoded card of the target contact.

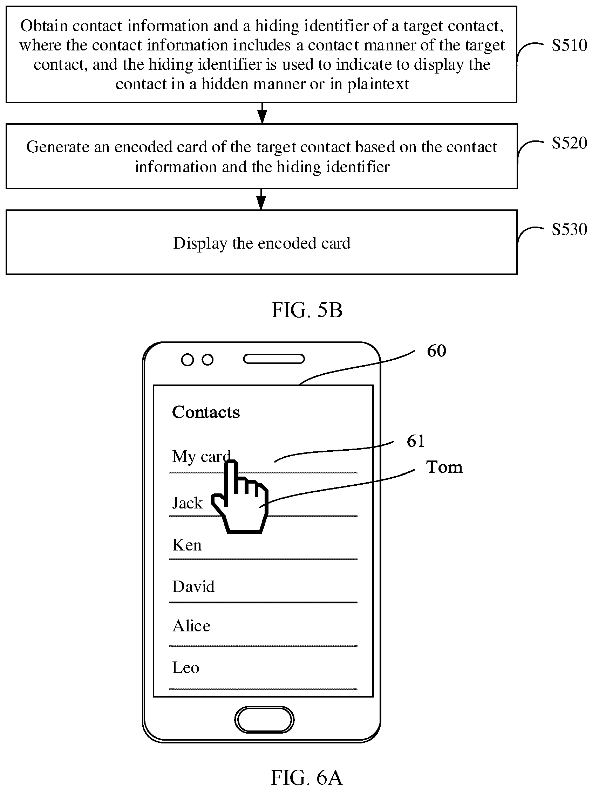

In some embodiments of this application, steps S510 and S520 are performed in response to a card generation instruction triggered by the user. Optionally, after the encoded card of the target contact is generated, as shown in FIG. 5B, the method further includes: displaying the encoded card. To be specific, the terminal device loads a display interface including the encoded card, so that another terminal device scans the encoded card and then adds the target contact. According to the embodiment shown in FIG. 5B, interaction efficiency is improved, and convenience and efficiency of contact adding are further improved.

In some other embodiments of this application, in response to a new contact adding event, that is, a target contact adding event, the terminal device generates the encoded card based on the contact information and the hiding identifier of the target contact. In this case, the terminal device automatically performs steps S510 and S520 without triggering the contact card generation instruction by the user. Optionally, after the encoded card is generated, the encoded card is stored for subsequent calling.

The card generation instruction is an instruction for triggering, by the user by performing a preset operation, the terminal device to generate the encoded card of the target contact, and a card generation event is generally triggered by the user in an interface of a contacts application or a social application. The interface includes an interface of a contact list, a contact information display interface, a contact information editing interface, or the like. The preset operation includes one or a combination of several of a touch operation, a cursor control operation, a voice control operation, and the like. The cursor control operation includes a cursor control operation performed by using a keyboard, and/or a mouse, and/or a remote control lever, and/or a trackball, and/or a joystick, and/or a touch panel, and/or the like. A manner of triggering the card generation instruction is not limited in this application.

The target contact adding event is an event that the terminal device adds the target contact to the contact list or an address book, may be triggered by the user, or may be actively performed by the terminal device.

In this embodiment of this application, the terminal device performs encoding based on the contact information and the hiding identifier, to generate the contact card, where the hiding identifier is used to indicate to display the contact manner in the hidden manner or in plaintext on another terminal device. If the hiding identifier is used to indicate to display the contact manner in the hidden manner on the another terminal device, the another terminal device cannot display the contact manner of the user in plaintext. Therefore, the contact manner of the user may be set to be displayed in non-plaintext on the another terminal device, to improve security of user information and protect user privacy.

The following describes the embodiments of FIG. 5A and FIG. 5B in detail by using example application scenarios. It should be understood that the descriptions herein are merely examples, and cannot be construed as a limitation on this application.

In some embodiments of this application, the target contact may be the user (or the owner) of the terminal device. For example, when a mobile phone user Tom needs to show an encoded card to another user, the mobile phone user Tom first needs to generate the encoded card by using the mobile phone, and then shows the encoded card to the another user.

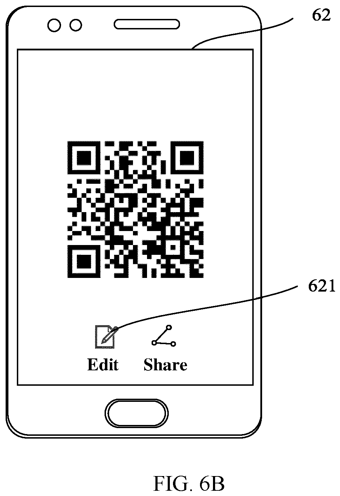

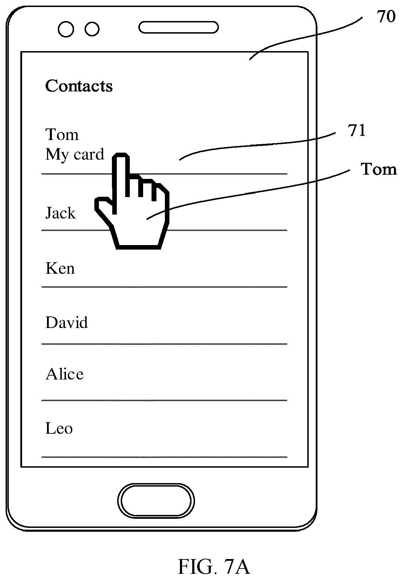

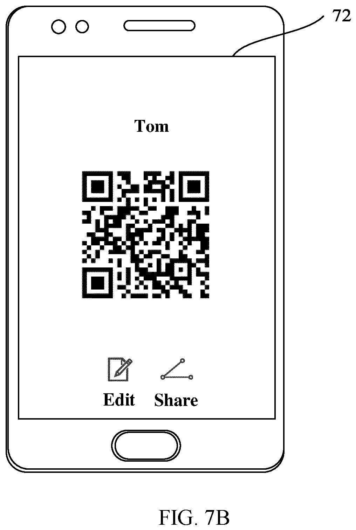

In a non-limiting example, FIG. 6A and FIG. 7A are schematic diagrams of a structure of the interface of a contact list according to this example. FIG. 6B and FIG. 7B are schematic diagrams of a structure of the encoded card display interface according to this example.

For example, when the user Tom does not edit personal information on the mobile phone, as shown in FIG. 6A, Tom starts the contacts application or another address book application of the mobile phone, enters an interface 60 of a contact list, and taps a my card control 61 on the interface 60 of a contact list to trigger a card generation instruction. The mobile phone generates the encoded card based on a local phone number and a hiding identifier "0", where the hiding identifier "0" is used to indicate to display a contact manner in plaintext on the another terminal device. Optionally, after generating the encoded card, the mobile phone displays the encoded card, that is, loads the display interface including the encoded card, for example, a display interface 62 that includes the encoded card and shown in FIG. 6B.

For another example, when the user Tom edits personal information on the mobile phone in advance, for example, enters a name "Tom" and selects the hiding control, as shown in FIG. 7A, Tom starts the contacts application of the mobile phone, enters an interface 70 of a contacts list, and taps a my card control 71 on the interface 70 of a contact list to trigger a card generation instruction. The mobile phone generates the encoded card based on a local phone number, the name "Tom", and a hiding identifier "1", where the hiding identifier "1" is used to indicate to display the contact manner in the hidden manner. Optionally, after generating the encoded card, the mobile phone displays the encoded card, that is, loads the display interface including the encoded card, for example, a display interface 72 that includes the encoded card and that is shown in FIG. 7B.

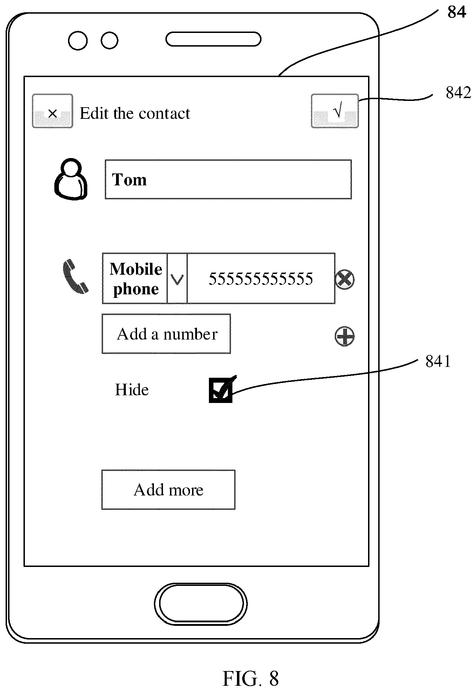

In another non-limiting example, FIG. 8 is a schematic diagram of a structure of the user information editing interface in the contacts application according to the example. The user information editing interface is used by the user to edit the contact information. Tom starts the contacts application of the mobile phone, enters the interface of a contact list shown in FIG. 6A or FIG. 7A, and taps the my card control on the interface of a contact list to trigger a card generation instruction. The mobile phone generates the encoded card, and loads the display interface that includes the encoded card and shown in FIG. 6B or FIG. 7B. For example, the user Tom may tap an editing control 621 in the display interface 62 shown in FIG. 6B, and the mobile phone loads a user information editing interface 84 shown in FIG. 8. The user Tom may edit the contact information (including a name and a contact manner) and select a hiding identifier on the user information editing interface 84. In the example shown in FIG. 8, when the user Tom selects a hiding control 841, the hiding identifier is set as 1, indicating that the hiding identifier is used to indicate to display the contact manner in the hidden manner. When the user Tom does not select the hiding control 841, the hiding identifier is set as 0, indicating that the hiding identifier is used to indicate to display the contact manner in plaintext. If the user Tom selects the hiding control 841 and taps a √ control 842 to trigger the card generation instruction, the mobile phone generates the encoded card based on the name "Tom", the phone number "55555555555", and the hiding identifier "1", and loads the display interface 72 that includes the encoded card and shown in FIG. 7B. It should be noted that, in another example of this application, the user may alternatively trigger a selection control, for example, an option button or switch, or an alternative drop-down list, to select the hiding identifier. It should be understood that a manner of selecting the hiding identifier is not limited in this application.

In some embodiments of this application, the target contact may be a friend, a family member, a customer, or the like of the user of the terminal device. When the mobile phone user Tom needs to show the encoded card to another user, the mobile phone user Tom first needs to generate the encoded card by using the mobile phone, and then shows the encoded card to the another user.

In a non-limiting example, still refer to FIG. 6A and FIG. 7A. The user Tom starts the contacts application of the mobile phone, and enters the interface 60 of a contact list shown in FIG. 6A or FIG. 7A. The user taps a contact Jack control 602 in the interface 60 of a contact list, and the mobile phone loads the contact information display interface, and displays contact information of a contact Jack, which includes a name Jack and a phone number.

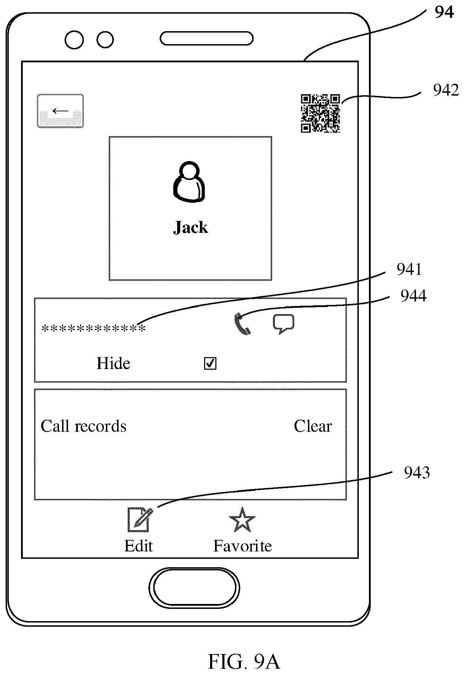

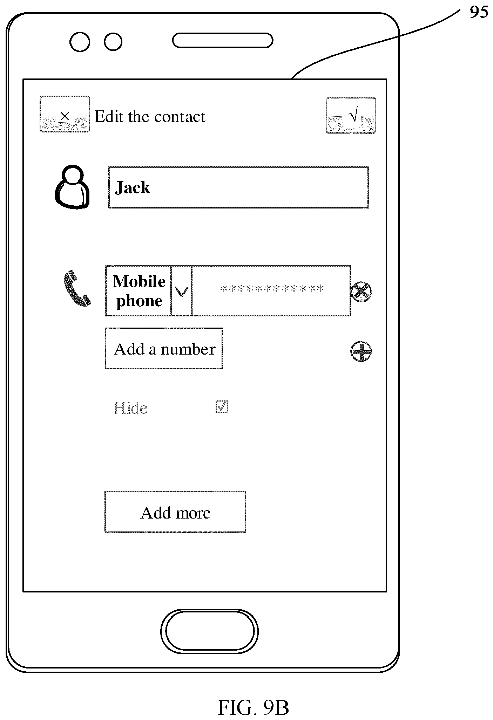

In a case of this example, when the user Tom adds the contact information of Jack, a hiding identifier set by Jack is "1", indicating that the hiding identifier is used to indicate to display the contact manner in the hidden manner. Therefore, when the user Tom enters the contact information display interface of Jack, for example, a contact information display interface 94 shown in FIG. 9A, a phone number 941 of Jack is displayed in the hidden manner as "^{∗∗∗∗∗∗∗∗∗∗∗}". When the user Tom taps a two-dimensional code identifier control 942 in the contact information display interface 94 of Jack, the card generation instruction is triggered, and the mobile phone cannot generate an encoded card of Jack. Optionally, the mobile phone generates the encoded card of Jack based on the contact name "Jack", the displayed phone number "^{∗∗∗∗∗∗∗∗∗∗}", and the hiding identifier "1". Optionally, the contact information display interface 94 of Jack does not include the two-dimensional code identifier control 942, to indicate that the encoded card of the contact cannot be generated. Optionally, the contact information display interface 94 of Jack may include an editing control 943. When the user Tom taps the editing control 943, the mobile phone loads a contact information editing interface 95 shown in FIG. 9B. The user Tom may edit the information about the contact Jack in the user information editing interface 95. Editable contact information does not include a contact manner that is displayed in the hidden manner and a hiding identifier, and non-editable contact information in FIG. 9B includes the phone number of Jack and the hiding identifier. Optionally, the contact information display interface 94 shown in FIG. 9A may not include the editing control 943, to indicate that the contact information of the contact cannot be edited.

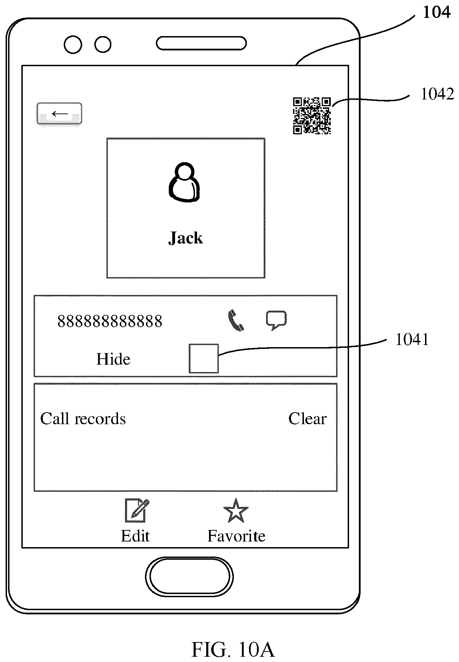

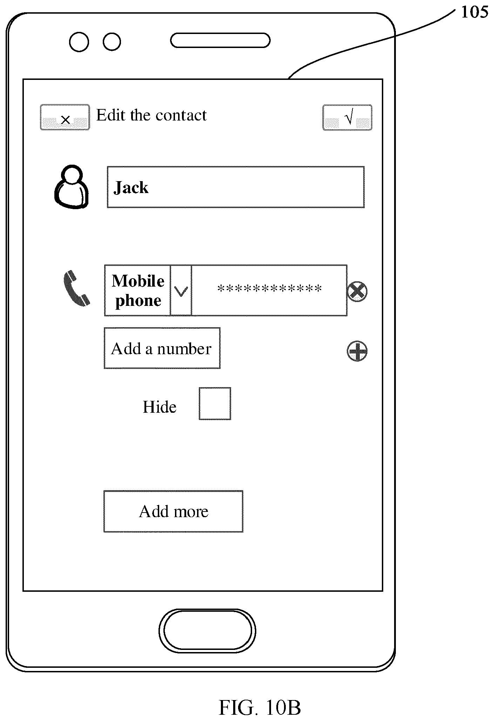

In another case of this example, when the user Tom adds the contact information of Jack, the hiding identifier set by Jack is "0", indicating that the hiding identifier is used to indicate to display the contact manner in plaintext. Therefore, when the user Tom enters the contact information display interface, for example, a contact information display interface 104 of Jack shown in FIG. 10A, a phone number 1041 of Jack is displayed in plaintext as "88888888888", and a hiding control is not selected. When the user Tom taps a two-dimensional code identifier control 1042 in the contact information display interface 104 of Jack, the card generation instruction is triggered, and the mobile phone generates the encoded card of Jack based on the name "Jack", the phone number "88888888888", and the hiding identifier "0", and loads a display interface including the encoded card of Jack. Optionally, the contact information display interface 104 of Jack may include an editing control 1043. When the user Tom taps the editing control 1043, the mobile phone loads a contact information editing interface 105 shown in FIG. 10B. The user Tom may edit information about the contact Jack in the user information editing interface 105. In FIG. 10B, there is no editing limitation on the contact information of Jack.

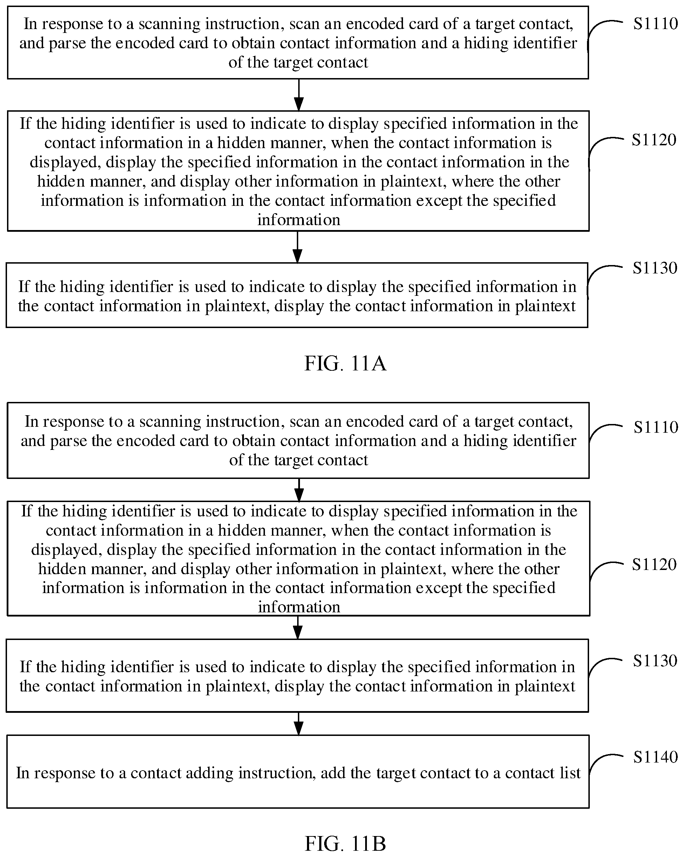

FIG. 11A is an implementation flowchart of a contact information display method according to an embodiment of this application. The method may be applied to a terminal device. For example, the method may be applied to the second terminal device, for example, the mobile phone, according to the embodiments in FIG. 2A, FIG. 2B, FIG. 3A, and FIG. 3B. As shown in FIG. 11A, the method includes steps S1110 and S1120. A specific implementation principle of each step is as follows.

S1110: In response to a scanning instruction, scan an encoded card of a target contact, and parse the encoded card to obtain contact information and a hiding identifier of the target contact.

The encoded card is generated after the contact information and the hiding identifier of the target contact are encoded, and the hiding identifier is used to indicate to display specified information in the contact information in a hidden manner or in plaintext.

The scanning instruction is an instruction of triggering, by a user by performing a preset operation, the terminal device to start a camera to scan the encoded card. The scanning instruction is usually triggered by the user in an interface of a contacts application or a social application. The interface includes a main interface of a contact list, a sub-interface of a contact list, a function list interface, and the like. The preset operation includes one or a combination of several of a touch operation, a cursor control operation, a voice control operation, and the like. A manner of triggering the scanning instruction is not limited in this application.

In response to the scanning instruction, the terminal device starts the camera to scan the encoded card, and parses the encoded card to obtain the contact information and the hiding identifier of the target contact.

It should be noted that the encoded card may include an electronic card generated by another terminal device, or may include a paper card. This is not limited in this application.

S1120: If the hiding identifier is used to indicate to display the specified information in the contact information in the hidden manner, when the contact information is displayed, display the specified information in the contact information in the hidden manner, and display other information in plaintext, where the other information is information in the contact information except the specified information.

S1130: If the hiding identifier is used to indicate to display the specified information in the contact information in plaintext, display the contact information in plaintext.

After parsing the encoded card to obtain the contact information and the hiding identifier of the target contact, the terminal device loads a display interface. At least the contact information is displayed in the display interface. When the hiding identifier is used to indicate to display the specified information in the contact information in the hidden manner, the specified information is displayed in the display interface in the hidden manner, and contact information other than the specified information is displayed in plaintext. When the hiding identifier is used to indicate to display the specified information in plaintext, the specified information and the contact information other than the specified information is displayed in plaintext in the display interface. That is, the contact information is displayed in plaintext.

Optionally, in some embodiments, the terminal device obtains the hiding identifier and the contact information, and may display, in the display interface, the contact information and a hiding control representing the hiding identifier. In another embodiment, the terminal device obtains the hiding identifier and the contact information, and may display the contact information in the display interface, but does not display a hiding control representing the hiding identifier.

In an example of this application, the terminal device parses an encoded image by using a preset decoding program, learns that the encoded image is a contact card, and obtains various pieces of contact information of the contact card and the hiding identifier corresponding to the specified information in the contact information. The terminal device may store the contact information and the hiding identifier in storage space preset for the contact card. In this case, the target contact has not been added to the contact list or an address book. The terminal device displays the contact information. When displaying the contact information, the terminal device determines, based on the hiding identifier corresponding to the specified information, to display the specified information in the contact information in the hidden manner or in plaintext.

It should be understood that although step S1120 and step S1130 are sequentially numbered, it does not mean that there is a necessary time sequence between the two steps. The time sequence of the two steps is not limited in this application. It should be further understood that, in an application scenario in this embodiment of this application, step S1120 and step S1130 may be not both performed, but one of the steps is performed when a corresponding condition is met.

In this embodiment of this application, encoding is performed based on the contact information and the hiding identifier to generate the contact card. If the hiding identifier is used to indicate to display the specified information of the contact in the hidden manner, when the terminal device scans and parses the contact card, the specified information of the user cannot be displayed in plaintext on the terminal device. Therefore, the hiding identifier is added to the encoded card, and the specified information of the user is set to be displayed in ciphertext on the terminal device that performs scanning, to improve security of user information and protect user privacy.

It should be noted that, as described above, the terminal device configured to generate the encoded card in this embodiment of this application may be configured to generate the encoded card of the user, or may generate an encoded card of another contact (a contact other than the user).

When the terminal device that generates the encoded card is configured to generate the encoded card of the user, regardless of any type of hiding identifier set by the user, the encoded card that includes accurate or complete contact information can be generated. In this case, the terminal device that scans the encoded card may display the contact information by scanning the encoded card, to add the contact. Corresponding to the two types of hiding identifiers, the contact information display method includes steps S1110 and S1120, or includes steps S1110 and S1130. In a non-limiting example, refer to the schematic diagram of the structure of the second terminal device shown in FIG. 2A and FIG. 2B. As shown in FIG. 2A and FIG. 2B, the second terminal device 22 scans the encoded card 213 of the user Tom displayed by the first terminal device 21, parses the encoded card 213 to obtain the contact information (including the name "Tom" and a mobile phone number "55555555555") and the hiding identifier (the hiding identifier is set as 1), loads a display interface for displaying the contact information and the hiding control that represents the hiding identifier, and displays the phone number in the contact information in the hidden manner. Specifically, a string of asterisks (^{∗}) are used to replace the phone number for display.

However, when the terminal device that generates the encoded card is configured to generate the encoded card of the another contact, the following two cases are included.

In a first case, to be specific, when a hiding identifier of the another contact is used to indicate to display the specified information in plaintext, the terminal device that generates the encoded card may generate the encoded card, where the encoded card includes the accurate or complete contact information and the hiding identifier. The terminal device that scans the encoded card can add the contact by scanning the encoded card. In this case, step S1120 is not required for the contact adding method. In other words, the contact adding method includes steps S1110 and S1130.

In a second case, a hiding identifier of the another contact is used to indicate to display the specified information in the hidden manner. In some embodiments, the terminal device that generates the encoded card cannot generate the encoded card, and the terminal device that scans the encoded card cannot add the contact by scanning the encoded card. In some other embodiments, even if the terminal device that generates the encoded card generates the encoded card, the encoded card does not include the specified information in the contact information. In this case, the terminal device that scans the encoded card cannot obtain the complete contact information of the target contact, which means that the terminal device that scans the encoded card cannot add a valid contact by scanning the encoded card. In this case, another user is prevented from disclosing the specified information to a third party, user information security is greatly improved, and user privacy is further protected. In a non-limiting example, refer to the schematic diagram of the structure of the interface of the second terminal device shown in FIG. 3A and FIG. 3B and related descriptions of the embodiment corresponding to FIG. 3A and FIG. 3B. In the example shown in FIG. 3A and FIG. 3B, the second terminal device cannot obtain a phone number of a contact, and therefore cannot add valid contact information.

Optionally, based on the embodiment shown in FIG. 11A, in another embodiment, as shown in FIG. 11B, after steps S1130 and S1120, the method further includes step S1140. For same parts between the embodiment shown in FIG. 11B and the embodiment shown in FIG. 11A, refer to the foregoing descriptions. Details are not described herein again.

S1140: In response to a contact adding instruction, add the target contact to the contact list.

The contact adding instruction is an instruction of triggering, by the user by performing a preset operation, the terminal device to add the target contact to the contact list. The contact adding instruction is generally triggered by the user in the display interface. The display interface includes an interface that includes the contact information and loaded by the terminal device after the terminal device scans and parses the encoded card. The preset operation includes one or a combination of several of a touch operation, a cursor control operation, a voice control operation, and the like. A manner of triggering the contact adding instruction is not limited in this application.

The terminal device adds the target contact to the contact list in response to the contact adding instruction. The contact list may include a contact list of a contacts application, a social application, or the like. The social application includes an instant messaging application and the like. The terminal device stores the contact information and the hiding identifier of the target contact corresponding to the specified information in the contact information. When the information of the target contact needs to be obtained, for example, when the information of the target contact needs to be displayed, the terminal device first obtains the hiding identifier corresponding to the specified information of the target contact, and determines, based on the hiding identifier, whether to display the specified information in the contact information in the hidden manner.

When the hiding identifier is used to indicate to display the specified information in plaintext, in this embodiment of this application, the terminal device stores the contact information and the hiding identifier in plaintext. When the information of the target contact needs to be obtained, for example, the information of the target contact needs to be displayed, the terminal device first obtains the hiding identifier corresponding to the specified information of the target contact, and determines, based on the hiding identifier, to display the specified information in plaintext.

When the hiding identifier is used to indicate to display the specified information in the hidden manner, in some embodiments of this application, the terminal device may store the contact information and the hiding identifier in plaintext. When the information of the target contact needs to be obtained, for example, the information of the target contact needs to be displayed, the terminal device first obtains the hiding identifier corresponding to the specified information of the target contact, and determines, based on the hiding identifier, to display the specified information in the hidden manner, for example, replace the specified information with a string of asterisks.

In some other embodiments of this application, if the hiding identifier is set for the specified information of the target contact, the terminal device may first encrypt the specified information, and store encrypted specified information. When the contact information of the target contact needs to be obtained, for example, the contact information of the target contact needs to be displayed, the terminal device first obtains the hiding identifier corresponding to the specified information of the target contact, and determines, based on the hiding identifier, to display the specified information in the hidden manner, for example, replace the specified information with a string of asterisks. The specified information is encrypted and then stored, so that security of the user information is further improved.

In this embodiment of this application, in one aspect, the contact is added by scanning the encoded card, and the user does not need to manually enter the contact information. In this way, the contact is conveniently and quickly added. In another aspect, the hiding identifier is added to the encoded card, and whether the specified information in the user information is displayed in the hidden manner on the terminal device that scans the encoded card may be flexibly set. For example, the specified information of the user may be set to be displayed in the hidden manner on the terminal device that scans the encoded card, to protect user privacy and improve information security.

In a non-limiting example, the specified information includes the contact manner, and specifically, includes the phone number. Still refer to the schematic diagram of the structure of the second terminal device 22 shown in FIG. 2A and FIG. 2B. As shown in FIG. 2A and FIG. 2B, the second terminal device 22 scans the encoded card 213 of the user Tom displayed by the first terminal device 21, obtains the contact information (including the name "Tom" 2111 and the mobile phone number "55555555555" 2112) and the hiding identifier (the hiding identifier is set as 1) through parsing, and loads a new contact creation interface 214 to display the name 2111, the phone number 2112, and the hiding identifier, where a string of asterisks (^{∗}) are used to replace the phone number for display. The user of the second terminal device 22 may trigger a contact adding instruction by tapping a √ control 215 on the new contact creation interface 214. The second terminal device 22 adds Tom to the contact list, that is, adds the contact information and the hiding identifier of Tom to the address book.

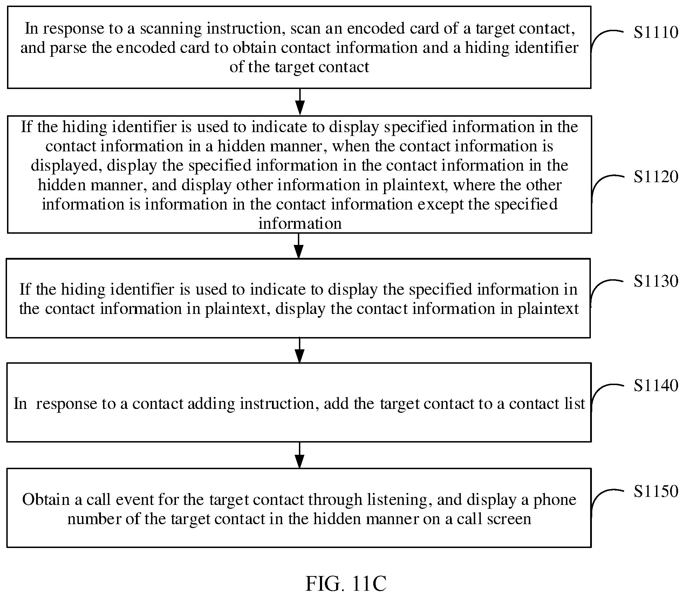

Optionally, based on the embodiment shown in FIG. 11B, in another embodiment, if the hiding identifier is used to indicate to display the specified information in the hidden manner, and the specified information includes the phone number, as shown in FIG. 11C, after step S1140, the method further includes step S1150. For same parts between the embodiment shown in FIG. 11C and the embodiment shown in FIG. 11B, refer to the foregoing descriptions. Details are not described herein again.

S1150: Obtain a call event for the target contact through listening, and display the phone number of the target contact in the hidden manner on a call screen.

In this embodiment of this application, the specified information of the target contact includes the phone number, the hiding identifier is set for the phone number of the target contact, and the hiding identifier is used to indicate to display the phone number in the hidden manner. For example, a hiding identifier bit corresponding to the phone number is "1".

The call event is an event of triggering, by the user by performing a preset operation, the terminal device to make a call with any contact. The call event includes an outgoing call event and an incoming call event, where the outgoing call event is a call event of dialing by the user of the terminal device, and the incoming call event is a call event of answering by the user of the terminal device. The outgoing call event is usually triggered by the user in a contact information display interface, an interface of a contact list, an interface of a call record list, or the like. The incoming call event may be triggered by the user in a caller ID display interface. The calling event for the target contact may be triggered in a target contact information display interface, or may be triggered in an interface of a contact list including the target contact, or may be triggered in an interface of a call record list including the target contact, or the like. The call includes but is not limited to a voice call, a video call, and the like. The preset operation includes one or a combination of several of a touch operation, a cursor control operation, a voice control operation, and the like. A manner of triggering the call event is not limited in this application.

In response to the call event for the target contact, the terminal device displays the phone number of the target contact in the hidden manner on the call screen. The call screen includes but is not limited to a call waiting interface, the caller ID display interface, an in-call interface, and the like.

An example in which the terminal device triggers the outgoing call event is used for description.

If the terminal device stores the name, the phone number, and the hiding identifier of the target contact in plaintext, the terminal device may obtain the plaintext phone number of the target contact, make a call, and display the phone number of the target contact in the hidden manner and the name of the target contact in plaintext in the call waiting interface and the in-call interface based on the hiding identifier for the target contact.

If the terminal device stores the name and the hiding identifier of the target contact in plaintext, but stores the phone number after encryption, the terminal device may first obtain encrypted phone number, decrypt the encrypted phone number to obtain the plaintext phone number, make a call, and display the phone number of the target contact in the hidden manner and the name of the target contact in plaintext in the call waiting interface and the in-call interface based on the hiding identifier for the target contact.

In a non-limiting example of this application, for example, still refer to FIG. 9A. The user Tom of the terminal device triggers an outgoing call event for the target contact Jack in a user interface of the contacts application, and the user triggers the outgoing call event by tapping a control 944 in the contact information display interface 94. A phone application of the terminal device first obtains a plaintext phone number "88888888" of Jack from the contacts application, then makes a call, and determines, based on the hiding identifier, whether to display the phone number of Jack in the hidden manner on the call screen. In this example, the hiding identifier is used to indicate to display the phone number in the hidden manner. For example, if a hiding identifier bit used for generation of the encoded card is set as 1, the phone number of Jack is displayed in the hidden manner on the call screen, for example, is replaced with a string of asterisks (^{∗}).

In another non-limiting example of this application, continuing with the foregoing example, the terminal device of Tom receives a call request from the terminal device of Jack, and the telephone application in the terminal device of Tom obtains the hiding identifier for Jack from the contacts application, and determines, based on the hiding identifier of Jack, whether to display the phone number of Jack in the hidden manner on the call screen. In this example, the hiding identifier of Jack is used to indicate to display the phone number in the hidden manner. For example, if the hiding identifier bit used for generation of the encoded card is set as 1, the phone number of Jack is displayed in the hidden manner in a call screen of the terminal device of Tom with Jack, for example, is replaced with a string of asterisks (^{∗}).

In this embodiment, whether to display the phone number of the target contact in the hidden manner on the call screen is determined based on the hiding identifier, to further avoid disclosure of the user information.

It should be understood that, in this embodiment of this application, the contact manner of the target contact includes the phone number, and the hiding identifier is set for the phone number corresponding to the target contact. When the hiding identifier is used to indicate to display the phone number in the hidden manner, the phone number is displayed in the hidden manner on the call screen, to avoid disclosure of the user information.

Optionally, based on the embodiment shown in FIG. 11C, after step S1150, the method further includes: displaying the phone number of the target contact in the hidden manner in the interface of the call record list, to further avoid disclosure of the user information.

The following describes, by using two specific application scenarios, the contact card generation method and the contact information display method that are provided in this application as examples.

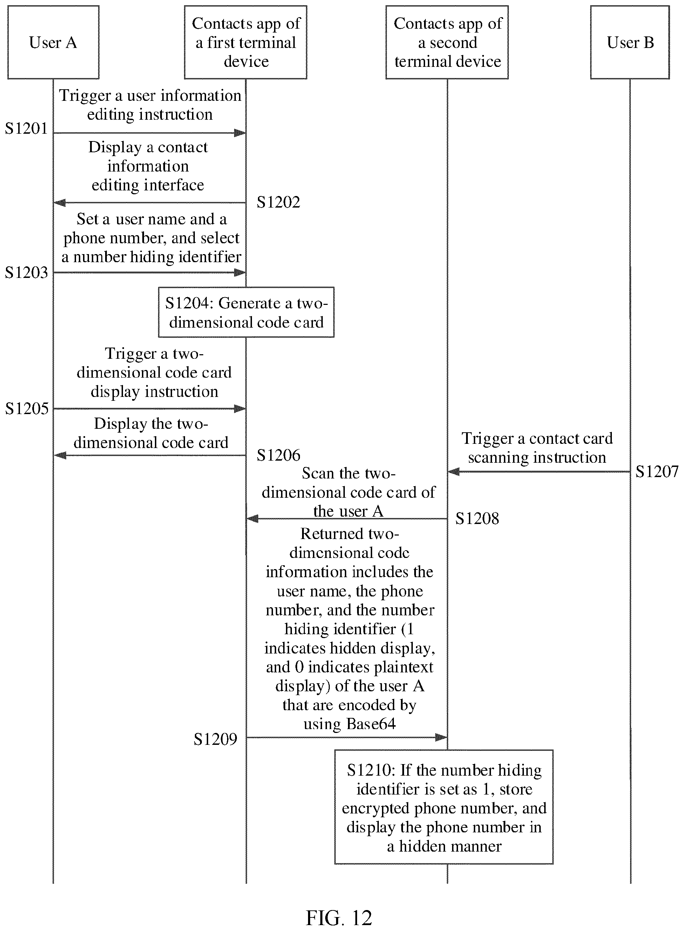

FIG. 12 is a schematic diagram of interaction between the first terminal device and the second terminal device according to an application scenario of this application. The first terminal device completes a process of generating a contact card, and the second terminal device completes a process of scanning the contact card and adding a contact. In this example, a user of the first terminal device is A, and a user of the second terminal device is B.

As shown in FIG. 12, specific interaction steps are as follows.

S1201: A contacts app of the first terminal device receives a user information editing instruction triggered by the user A. The user information editing instruction may be triggered by the user A in a two-dimensional code display interface of the contacts application, for example, may be triggered by the user by tapping the editing control in FIG. 6B and FIG. 7B.

S1202: The contacts app of the first terminal device displays a contact information editing interface. In addition, the contacts app automatically extracts a local phone number of the first terminal device, and may automatically fill the local phone number in a phone number box in the contact information editing interface. The contact information editing interface includes a number hiding control. To be specific, in this example, a hiding identifier is set for a phone number in a contact manner. It should be understood that, in another scenario, a hiding identifier may alternatively be set for another contact manner.

S1203: The user sets a user name and a phone number (including deleting the local phone number, adding another phone number, and the like) in the contact information editing interface, and selects the number hiding control. In this example, if the number hiding control is selected, it indicates that a number hiding identifier bit is set as 1, and the phone number needs to be displayed in a hidden manner. It should be understood that, in another scenario, if the number hiding control is not selected, it indicates that a number hiding identifier bit is set as 1, and the phone number needs to be displayed in a hidden manner.

S1204: The user A triggers an information storage instruction in the contact information editing interface of the contacts app. For example, as shown in FIG. 8, the user A triggers the information storage instruction by tapping the √ control in an upper right corner of the contact information editing interface. The contacts app generates a two-dimensional code card of the user A based on the user name, the phone number, and the number hiding identifier. Two-dimensional code information of the two-dimensional code card includes the user name, the phone number, and the number hiding identifier that are encoded by using Base64. For example, when the number hiding identifier is set as 1, it indicates that the phone number is displayed in the hidden manner, and when the number hiding identifier is set as 0, it indicates that the phone number is displayed in plaintext.

S1205: The user A triggers a two-dimensional code card display instruction in the contacts app.

It should be noted that, in some scenarios, the user A has edited contact information and the hiding identifier in advance. In this case, steps S1201 to S1204 are not required, and step S1205 is performed to invoke the two-dimensional code card for display. In some other scenarios, step S1205 may be omitted in some scenarios. To be specific, after step S1204 in which the contacts app generates the two-dimensional code card of the user A based on the user name, the phone number, and the hidden number identifier is performed, the contacts app may display the two-dimensional code card without being triggered by the user.

S1206: The contacts app of the first terminal device displays the two-dimensional code card of the user A.

S1207: The user B starts a contacts app of the second terminal device, and triggers a contact card scanning instruction. For example, the contact card scanning instruction is triggered by tapping a scan control of the contacts app.

S1208: The contacts app of the second terminal device invokes a camera or a shooting device to scan the two-dimensional code card of the user A.

S1209: The contacts app of the second terminal device decodes the two-dimensional code card of the user A to obtain the name, the phone number, and the number hiding identifier of the user A. In this example, the number hiding identifier is 1.

S1210: The contacts app of the second terminal device determines, based on a value of the number hiding identifier, whether to encrypt the phone number and display the phone number in the hidden manner. In this example, the number hiding identifier bit is set as 1. The name, an encrypted phone number, and the number hiding identifier of the user A are stored, and the phone number is replaced with a string of asterisks (^{∗}) for hidden display. In this example, based on displaying the phone number in the hidden manner, the encrypted phone number is stored. The phone number is encrypted for storage, to further improve security of user information and protect user privacy. It should be understood that when the number hiding identifier bit is set as 0, the phone number is not encrypted.

It may be understood that, similar to the application scenario shown in FIG. 12, the first terminal device may also add the second terminal device to an address book. To be specific, the second terminal device generates a two-dimensional code card of the user B, and the first terminal device scans the two-dimensional code card of the user B to add the user B to a contact list. It can be learned that, in this embodiment of this application, the first terminal device may be configured to generate an encoded card in some scenarios, and the second terminal device may be configured to scan an encoded card. In some other scenarios, the first terminal device may be configured to scan an encoded card, and the second terminal device may be configured to generate an encoded card. Therefore, "first" and "second" cannot be used as a limitation on an application scenario of a terminal device, and should be construed as being used to distinguish different terminal devices.

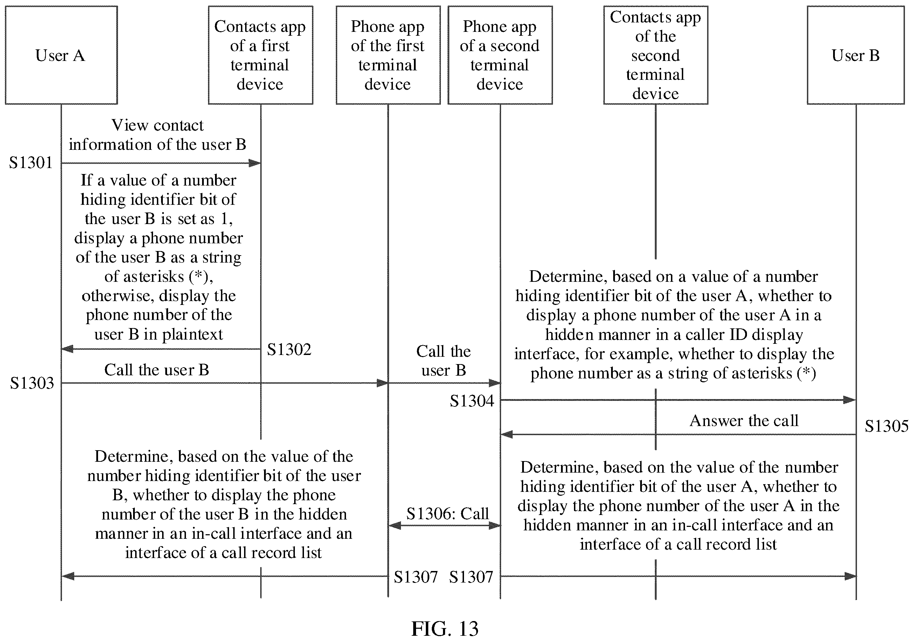

FIG. 13 is a schematic diagram of interaction between the first terminal device and the second terminal device according to another application scenario of this application. This application scenario continues with the application scenario shown in FIG. 12. To be specific, on a basis that the first terminal device and the second terminal device add each other as contacts, a process of a call between the first terminal device and the second terminal device is added.

As shown in FIG. 13, specific interaction steps are as follows.

S1301: The user A starts the contacts app of the first terminal device to query contact information of the user B.

S1302: The contacts app of the first terminal device determines, based on a value of a hiding identifier bit for the user B, whether to display a phone number of the user B in the hidden manner, when the value of the hiding identifier bit is "1", displays the phone number of the user B in the hidden manner, for example, displays the phone number as a string of asterisks, and when the value of the hiding identifier bit is not "1", displays the phone number of the user B in plaintext.

S1303: The user A taps a call button, and a phone app of the first terminal device decrypts the phone number of the user B based on encrypted phone number of the user B, and calls the user B. It should be noted that a symmetric encryption algorithm and an asymmetric encryption algorithm may be used in this embodiment of this application. This is not limited herein.

S1304: A phone app of the second terminal device of the user B determines, based on the value of the hiding identifier bit for the user A, whether to display the phone number of the user A in the hidden manner in a caller ID display interface, for example, display the phone number as a string of asterisks.

S1305: The user B answers the call.

S1306: The first terminal device of the user A and the second terminal device of the user B establish a communication link, and perform a call.

S1307: The phone app of the first terminal device determines, based on the value of the hiding identifier bit for the user B, whether to display the phone number of the user B in the hidden manner in an in-call interface and an interface of a call record list. For example, if the hiding identifier bit is "1", the phone app of the first terminal device displays the phone number of the user B as a string of asterisks. The phone app of the second terminal device determines, based on the value of the hiding identifier bit for the user A, whether to display the phone number of the user A in the hidden manner in an in-call interface and an interface of a call record list. For example, if the hiding identifier bit is "1", the phone app of the second terminal device displays the phone number of the user A as a string of asterisks.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

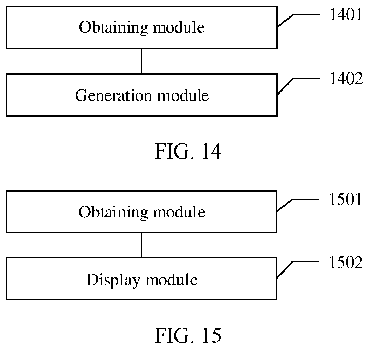

Corresponding to the contact card generation method in the foregoing embodiments, FIG. 14 is a block diagram of a structure of a contact card generation apparatus according to an embodiment of this application. For ease of description, only a part related to embodiments of this application is shown.

Refer to FIG. 14. The contact card generation apparatus is configured in a first terminal device, and includes:
an obtaining module 1401, configured to obtain contact information and a hiding identifier of a target contact, where the hiding identifier is used to indicate to display specified information in the contact information in a hidden manner or in plaintext on a second terminal device; and
a generation module 1402, configured to generate an encoded card of the target contact based on the contact information and the hiding identifier.

For a process in which each module in the contact card generation apparatus provided in this embodiment of this application implements a function of each module, refer to the descriptions in the foregoing embodiments of the contact card generation method. Details are not described herein again.

Corresponding to the contact information display method in the foregoing embodiment, FIG. 15 is a block diagram of a structure of a contact information display apparatus according to an embodiment of this application. For ease of description, only a part related to embodiments of this application is shown.

Refer to FIG. 15. The contact adding apparatus includes:
an obtaining module 1501, configured to: in response to a scanning instruction, scan an encoded card of a target contact, and parse the encoded card to obtain contact information and a hiding identifier of the target contact, where the encoded card is generated after encoding is performed based on the contact information and the hiding identifier of the target contact; and
a displaying module 1502, configured to: if the hiding identifier is used to indicate to display specified information in the contact information in a hidden manner, when the contact information is displayed, display the specified information in the contact information in the hidden manner, and display other information in plaintext, where the other information is information in the contact information except the specified information.

For a process in which each module in the contact information display apparatus provided in this embodiment of this application implements a function of each module, refer to the descriptions in the foregoing embodiments of the contact adding method. Details are not described herein again.

It may be understood that various implementations, combinations of the implementations, and beneficial effects thereof in the foregoing method embodiments are also applicable to the apparatus embodiments. Details are not described herein again.

It may be clearly understood by a person skilled in the art that, for convenient and brief description, division of the foregoing function units and modules is merely used as an example for illustration. In actual application, the foregoing functions can be allocated to different function units and modules and implemented based on a requirement, that is, an inner structure of the apparatus is divided into different function units and modules to implement all or some of the functions described above. Function units or modules in embodiments may be integrated into one processing unit, or each of the units may exist alone physically, or two or more units may be integrated into one unit. The integrated unit may be implemented in a form of hardware, or may be implemented in a form of a software function unit. In addition, specific names of the function units or modules are merely provided for distinguishing between the units or modules, but are not intended to limit the protection scope of this application. For a specific working process of the units or modules in the foregoing system, refer to a corresponding process in the foregoing method embodiments. Details are not described herein again.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product runs on a terminal device, the terminal device is enabled to implement the steps in the foregoing method embodiments.

In the foregoing embodiments, the descriptions of all embodiments have respective focuses. For a part that is not described or recorded in detail in an embodiment, refer to related descriptions in other embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

In the embodiments provided in this application, it should be understood that the disclosed apparatus and method may be implemented in other manners. For example, the described system embodiment is merely an example. For example, division into the modules or units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, steps in the foregoing method embodiments can be implemented. The computer program includes computer program code, and the computer program code may be in a source code form, an object code form, an executable file form, some intermediate forms, or the like. The computer-readable storage medium may include at least any entity or apparatus that can include the computer program code to the terminal device, a recording medium, a computer memory, a read-only memory (Read-Only Memory, ROM), and a random access memory (Random Access Memory, RAM), an electrical carrier signal, a telecommunications signal, and a software distribution medium, for example, a USB flash drive, a removable hard disk, a magnetic disk, or an optical disk. In some jurisdictions, according to legislation and patent practice, a computer-readable storage medium cannot be an electrical carrier signal or a telecommunications signal

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application. Therefore, the protection scope of this application shall be subject to the protection scope of the claims.

## Claims

1. A contact information display method, comprising:
in response to a scanning instruction, scanning an encoded card of a target contact, and parsing the encoded card to obtain contact information and a hiding identifier of the target contact, wherein the encoded card is generated after encoding is performed based on the contact information and the hiding identifier of the target contact; and
if the hiding identifier is used to indicate to display specified information in the contact information in a hidden manner, when the contact information is displayed, displaying the specified information in the contact information in the hidden manner, and displaying other information in plaintext, wherein the other information is information in the contact information except the specified information.

2. The method according to claim 1, further comprising:
if the hiding identifier is used to indicate to display the specified information in the contact information in plaintext, displaying the contact information in plaintext.

3. The method according to claim 1 or 2, wherein after the contact information is displayed, the method further comprises:
in response to a contact adding instruction, adding the target contact to a contact list.

4. The method according to claim 1 or 2, wherein the displaying the specified information in the contact information in the hidden manner comprises any one of the following:
displaying the specified information in ciphertext;
omitting some or all characters in the specified information; and
replacing some or all characters in the specified information with preset characters.

5. The method according to claim 3, wherein if the hiding identifier is used to indicate to display the specified information in the contact information in the hidden manner, and the specified information comprises a phone number of the target contact, the method further comprises: obtaining a call event for the target contact through listening, and displaying the phone number of the target contact in the hidden manner on a call screen.

6. The method according to claim 5, wherein the call event comprises a calling event or a called event, and the call screen comprises a call waiting interface, a caller ID display interface, or an in-call interface.

7. The method according to claim 3 or 5, wherein if the hiding identifier is used to indicate to display the specified information in the contact information in the hidden manner, and the specified information comprises the phone number of the target contact, the method further comprises:
displaying the phone number of the target contact in the hidden manner in an interface of a call record list.

8. The method according to claim 1 or 2, wherein the encoded card comprises a bar code card, a two-dimensional code card, or a combination code card, and the combination code card is a card comprising a bar code and a two-dimensional code.

9. A contact card generation method, applied to a first terminal device, wherein the method comprises:
obtaining contact information and a hiding identifier of a target contact, wherein the hiding identifier is used to indicate a second terminal device to display specified information in the contact information in a hidden manner or in plaintext; and
generating an encoded card of the target contact based on the contact information and the hiding identifier.

10. The generation method according to claim 9, wherein the obtaining contact information and a hiding identifier of a target contact comprises:
in response to a card generation instruction triggered by a user, obtaining the contact information and the hiding identifier of the target contact; or
in response to a target contact adding event, obtaining the contact information and the hiding identifier of the target contact.

11. A contact information display apparatus, comprising:
an obtaining module, configured to: in response to a scanning instruction, scan an encoded card of a target contact, and parse the encoded card to obtain contact information and a hiding identifier of the target contact, wherein the encoded card is generated after encoding is performed based on the contact information and the hiding identifier of the target contact; and
a displaying module, configured to: if the hiding identifier is used to indicate to display specified information in the contact information in a hidden manner, when the contact information is displayed, display the specified information in the contact information in the hidden manner, and display other information in plaintext, wherein the other information is information in the contact information except the specified information.

12. A contact card generation apparatus, configured in a first terminal device, wherein the apparatus comprises:
an obtaining module, configured to obtain contact information and a hiding identifier of a target contact, wherein the hiding identifier is used to indicate to display specified information in the contact information in a hidden manner or in plaintext on a second terminal device; and
a generation module, configured to generate an encoded card of the target contact based on the contact information and the hiding identifier.

13. A terminal device, comprising a memory, a processor, and a computer program that is stored in the memory and that can run on the processor, wherein when the processor executes the computer program, the terminal device is enabled to implement the contact information display method according to any one of claims 1 to 8, or implement the contact card generation method according to claim 9 or 10.

14. A computer-readable storage medium, wherein the computer-readable storage medium stores a computer program, and when the computer program is executed by a processor, the contact information display method according to any one of claims 1 to 8 is implemented, or the contact card generation method according to claim 9 or 10 is implemented.
